# FASCICULE DE BREVET EUROPEEN

(11) **EP 2 973 200 B1**
(45) Date de publication et mention de la délivrance du brevet: **22.04.2020**
(21) Numéro de dépôt: 14709703.4
(22) Date de dépôt: 13.03.2014
(51) Int. Cl.: G06F 21/82, G06F 21/83, G06F 21/84, G06F 21/74

(54) **PROCÉDÉ ET DISPOSITIF DE VISUALISATION SÉCURISÉE SUR UN ÉCRAN D'UN TERMINAL ÉLECTRONIQUE, TERMINAL CORRESPONDANT**
VERFAHREN UND VORRICHTUNG FÜR SICHERE ANZEIGEN AUF EINEM BILDSCHIRM EINES ELEKTRONISCHEN ENDGERÄTES UND ZUGEHÖRIGES ENDGERÄT
METHOD AND DEVICE FOR SECURE VIEWING ON A SCREEN OF AN ELECTRONIC TERMINAL, AND CORRESPONDING TERMINAL

(30) Priorité: 14.03.2013 FR 1352286
(43) Date de publication de la demande: 20.01.2016
(73) Titulaire: Ingenico Group, 75015 Paris (FR)
(72) Inventeur: MENET, Yannick, F-92320 Chatillon (FR); AUFFRAY, Christophe, F-92500 Rueil Malmaison (FR); DABBOUS, Nora, F-92150 Suresnes (FR)
(74) Mandataire: Vidon Brevets & Stratégie
(86) Numéro de dépôt international: PCT/EP2014/055011
(87) Numéro de publication internationale: WO 2014/140208

(56) Documents cités:
- EP-A1- 2 469 442
- EP-A2- 1 788 507
- WO-A1-2009/099706
- US-A1- 2009 254 986
- US-A1- 2011 093 723

## Description

### 1. Domaine de l'invention

Le domaine de l'invention est celui des terminaux électroniques. L'invention s'applique notamment aux terminaux de paiement électroniques et aux terminaux électroniques présentant des fonctionnalités de paiement sécurisé.

En particulier, l'invention s'applique à la sécurisation de l'affichage sur de tels terminaux.

### 2. Art antérieur

Actuellement, les terminaux de paiement électroniques sont considérés comme des terminaux de confiance par les utilisateurs, sur lesquels ces derniers saisissent des données sensibles telles qu'un code confidentiel ou des données utilisateurs.

L'évolution des marchés de ces terminaux tend à élargir leur utilisation en permettant, en plus de l'application de paiement, le support de « widgets », d'applications métier ou d'applications verticales, ... Dans la suite du document, on considère que le terminal fonctionne en mode « ouvert » quand des applications logicielles autres que celles rigoureusement sécuritaires sont exécutées sur celui-ci.

L'application sécurisée de paiement partage alors l'écran du terminal avec des applications en mode ouvert.

Il est donc nécessaire de pouvoir continuer à rassurer l'utilisateur sur la sécurité des actions de paiement tout en l'alertant sur le fait que la sécurité des autres applications offertes par son terminal n'est pas garantie. En effet, dans le mode ouvert, des applications logicielles autres que celles rigoureusement sécuritaires sont susceptibles de mettre en péril la sécurité du terminal et de trahir la confiance des utilisateurs.

Actuellement, il existe plusieurs techniques destinées à indiquer à l'utilisateur dans quel mode, sécurisé ou ouvert, le terminal fonctionne.

Par exemple, le document de brevet FR2914457 décrit l'utilisation d'une bannière indiquant le mode de fonctionnement du terminal, qui peut basculer entre différentes positions sur l'écran. Le déplacement de la bannière sur l'écran peut être défini aléatoirement ou être déclenché par l'introduction d'un moyen de paiement.

Un inconvénient de cette technique de l'art antérieur réside dans le manque de souplesse ou d'adaptabilité de la bannière qui, outre son déplacement possible, reste un élément prédéfini affiché en permanence sur l'écran.

### 3. Objectifs de l'invention

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique de sécurisation de l'affichage sur un écran d'un terminal électronique qui soit universelle et efficace dans tous les cas d'utilisation du terminal.

Dans au moins un mode de réalisation de l'invention, un objectif est de fournir une technique de sécurisation de l'affichage sur un écran d'un terminal électronique facile à mettre en œuvre et peu coûteuse, tout en offrant une ergonomie optimale à l'utilisateur.

### 4. Exposé de l'invention

L'invention concerne un procédé de visualisation sécurisée sur un écran d'un terminal électronique. Selon les différents modes de réalisation de l'invention, le procédé comprend les étapes suivantes :
- une étape de détermination du mode de fonctionnement, sécurisé ou ouvert, du terminal, l'étape de détermination du mode de fonctionnement étant contrôlée par au moins un processeur sécurisé du terminal ;
- une étape d'affichage d'au moins un indicateur par défaut représentatif du mode de fonctionnement déterminé du terminal, l'étape d'affichage étant contrôlée par au moins un processeur sécurisé du terminal ;
- une étape de modification d'affichage de l'indicateur, l'étape de modification d'affichage étant contrôlée par au moins un processeur sécurisé du terminal et tenant compte d'au moins une action prédéterminée de l'utilisateur sur le terminal et/ou d'une expiration d'au moins un délai prédéterminé.

Ainsi, l'invention repose sur une approche nouvelle et inventive de la visualisation sécurisée sur un écran d'un terminal électronique, en affichant à l'écran, sous le contrôle d'un processeur sécurisé du terminal, au moins un indicateur permettant à l'utilisateur de savoir s'il est en mode sécurisé ou non, les paramètres d'affichage de cet indicateur dépendant principalement des actions de l'utilisateur.

En effet, les terminaux électroniques à venir, et plus particulièrement les terminaux présentant des fonctionnalités de paiement, pourront fonctionner en mode sécurisé, par exemple pour des applications de paiement, et en mode ouvert, par exemple pour des applications clients. Il est donc important non seulement d'informer l'utilisateur du mode, sécurisé ou non, dans lequel se trouve le terminal, mais également de décourager explicitement l'utilisateur de saisir des données sensibles en mode ouvert, ou de le rassurer lorsqu'il souhaite saisir des données sensibles en mode sécurisé.

Pour ce faire, la solution selon les différents modes de réalisation de l'invention prévoit d'une part d'afficher un indicateur visuel représentatif du mode de fonctionnement du terminal et d'autre part de tenir compte d'au moins une action de l'utilisateur pour modifier les paramètres d'affichage de cet indicateur.

Ainsi, en mode sécurisé, l'affichage de l'indicateur permet de rassurer l'utilisateur lors de la saisie d'un code confidentiel par exemple, alors qu'en mode ouvert, l'affichage de l'indicateur permet de sensibiliser l'utilisateur au fait que le terminal fonctionne en mode ouvert.

Par ailleurs, l'affichage de l'indicateur, encore appelé avertisseur visuel, est toujours contrôlé par le processeur sécurisé, qui détermine si le mode de fonctionnement est sécurisé ou ouvert. De cette manière, l'affichage de l'indicateur, ainsi que les modifications de cet affichage, ne peut pas être corrompu ou empêché par une application malveillante.

Selon l'invention, l'avertisseur visuel est toujours présent (même s'il peut l'être par intermittence) et sa visibilité (taille, couleur, position, luminosité, intermittence) dépend des actions utilisateur sur le terminal. Ainsi, sans interactions utilisateur, l'indicateur est peu visible pour ne pas perturber l'utilisateur mais suffisamment visible pour capter l'attention de l'utilisateur et l'informer de l'état du terminal. Si plusieurs interactions interviennent de suite (dans un court délai par exemple), l'avertisseur visuel est de plus en plus visible, ou bien les caractéristiques de taille, couleur, position, luminosité, intermittence de l'indicateur peuvent changer pour alerter l'utilisateur.

Ainsi, un indicateur peut par exemple être affiché en transparence sur l'écran, au-dessus de la ou des applications en cours d'affichage sur l'écran du terminal, de manière très discrète pour ne pas perturber l'utilisateur dans son utilisation usuelle du terminal.

Ensuite, lorsque l'utilisateur effectue une action sur le terminal, l'affichage de l'indicateur est modifié, de façon à devenir par exemple plus ou moins présent sur l'écran.

Par exemple, cette modification de l'affichage peut être déclenchée par une saisie de l'utilisateur sur le clavier physique ou virtuel du terminal.

Dans ce cas, la modification de l'affichage a principalement pour objectif de rendre l'indicateur plus présent sur l'écran, de manière à sensibiliser plus distinctement l'utilisateur au fait que le terminal fonctionne en mode ouvert ou à rassurer plus distinctement l'utilisateur lors de la saisie d'un code confidentiel en mode sécurisé.

De plus, la modification de l'affichage de l'indicateur peut être graduelle. Par exemple, lorsque le terminal est en mode ouvert, et que l'utilisateur effectue une première saisie sur le clavier, une première modification de l'affichage de l'indicateur peut être mise en œuvre, de façon à alerter l'utilisateur du risque de saisie de données sensibles en mode ouvert. Puis, si l'utilisateur effectue une deuxième saisie, une deuxième modification de l'affichage de l'indicateur peut être mise en œuvre, de façon à rendre l'indicateur encore plus visible, et ainsi de suite. Par contre, si, après la première saisie, l'utilisateur n'interagit plus avec le terminal, alors l'affichage de l'indicateur peut revenir à l'affichage par défaut, le risque de saisie de données sensibles n'étant plus présent. Par exemple, le retour à l'affichage par défaut peut se faire suite à l'expiration d'un délai prédéterminé sans saisie de l'utilisateur.

Ensuite, si plusieurs modifications successives de l'affichage ont conduit à un affichage très présent sur l'écran, l'invention prévoit également, selon ce mode de réalisation, que l'affichage de l'indicateur revienne à l'affichage par défaut, par exemple lorsque l'utilisateur n'interagit plus avec le terminal pendant un délai prédéterminé, ou bien lorsque le risque lié au mode ouvert n'est plus avéré, etc.

Selon un aspect particulier de l'invention, l'étape de modification d'affichage tient compte d'au moins une information représentative d'une position prédéterminée pour l'indicateur.

Ainsi, le procédé selon ce mode de réalisation de l'invention permet de tenir compte d'une information représentative d'une position optimale de l'indicateur avant de mettre en œuvre l'affichage de celui-ci.

Par exemple, cette position optimale tient compte d'une position d'une fenêtre représentative, sur l'écran, des saisies sur le clavier physique du terminal, ou bien d'un historique de saisies effectuées dans le cas d'un clavier virtuel.

Ou alors, cette position optimale correspond à une position prédéfinie sur l'écran, permettant de ne pas gêner l'utilisateur indépendamment de la ou des applications en cours d'affichage sur l'écran.

Selon un mode de réalisation de l'invention, l'étape de modification d'affichage consiste en une modification d'au moins un paramètre de visualisation de l'indicateur appartenant au groupe comprenant :
- l'intensité ;
- la luminosité ;
- la transparence ;
- la couleur ;
- la taille ;
- la forme ;
- la position sur l'écran ;
- la langue du texte ;
- une combinaison d'au moins deux des paramètres du groupe.

Selon ce mode de réalisation de l'invention, l'affichage de l'indicateur est modifié par l'intermédiaire d'un ou plusieurs paramètres d'affichage de l'indicateur.

Par exemple, l'indicateur étant déjà affiché en transparence, la modification de l'affichage peut consister en une diminution/augmentation de la transparence, ou une augmentation/diminution de la luminosité ou de l'intensité d'affichage, ou bien une modification de la couleur de l'indicateur. De cette manière, l'indicateur apparaît plus ou moins distinctement sur l'écran, de manière à modifier la perception qu'en a l'utilisateur.

Ce mode de réalisation de l'invention prévoit également de modifier, en combinaison éventuellement avec les modifications précédemment citées, la taille ou la forme de l'indicateur, toujours dans le but de le rendre plus ou moins visible par l'utilisateur.

Par exemple, l'indicateur peut apparaître de plus en plus grand sur l'écran, lorsqu'il y a un risque de saisie de données sensibles en mode ouvert.

De même, selon ce mode de réalisation de l'invention, la position de l'indicateur sur l'écran peut être modifiée. La mobilité de la position de l'indicateur sur l'écran permet à la fois d'augmenter sa visibilité par l'utilisateur en attirant son attention par un affichage « mobile » et de diminuer la perturbation d'un utilisateur lors d'une saisie. La position de l'indicateur sur l'écran peut être modifiée par exemple de manière aléatoire. La position de l'indicateur sur l'écran peut être modifiée aussi de façon pilotée par le processeur en fonction du contenu affiché, soit pour augmenter la visibilité de l'indicateur sur l'écran, soit pour ne pas gêner un utilisateur lors d'une saisie.

Par exemple, l'étape de modification d'affichage met en œuvre un affichage en transparence d'un indicateur sous la forme d'au moins un objet graphique.

Ainsi, selon ce mode de réalisation de l'invention, l'indicateur se présente sous la forme d'un objet graphique tel qu'un icône, affiché en transparence sur la ou les applications déjà affichées sur l'écran. De cette manière, l'affichage de l'indicateur ne perturbe pas l'utilisateur dans sa visualisation sur l'écran, du fait de la transparence, tout en l'informant sur le mode de fonctionnement, sécurisé ou non, du terminal.

Cet icône peut être interprétable par l'utilisateur comme une alerte en mode ouvert, comme par exemple un « sens interdit » ou un « stop », et comme une autorisation, ou un encouragement, en mode sécurisé, comme par exemple un « smiley » ou un « feu vert ».

Selon un aspect particulier de l'invention, l'affichage en transparence de l'indicateur est mis en œuvre à intervalle régulier.

Ainsi, selon ce mode de réalisation de l'invention, l'indicateur n'est pas affiché en permanence mais sous une forme « clignotante », de façon à augmenter sa visibilité pour l'utilisateur.

Par exemple, une action de l'utilisateur sur le terminal appartient au groupe comprenant :
- une saisie sur un clavier physique ;
- une saisie sur un clavier tactile ;
- une saisie via un capteur biométrique ;
- une saisie vocale.

Ainsi, les actions de l'utilisateur permettant de déclencher un affichage de l'indicateur, ou de modifier l'affichage courant de l'indicateur, sont principalement des saisies sur un clavier, ce type de saisies étant particulièrement risqué en mode ouvert si l'utilisateur est trompé et invité à saisir des données sensibles (car normalement en mode ouvert un utilisateur ne devrait pas saisir de données sensibles). De plus, l'utilisateur doit également pouvoir être rassuré lorsqu'il saisit son code confidentiel, en mode sécurisé.

Les saisies biométriques (empreintes, iris, etc), ainsi qu'une saisie vocale, peuvent également permettre le déclenchement d'un affichage de l'indicateur, ou d'une modification de l'affichage courant de l'indicateur.

Selon une caractéristique particulière de l'invention, l'étape de modification d'affichage tient compte en outre d'au moins un paramètre d'affichage du fond d'écran du terminal.

Selon ce mode de réalisation de l'invention, un ou plusieurs paramètres d'affichage de l'indicateur sont modifiés de façon à ce que l'indicateur reste visible par rapport à l'image de fond.

Par exemple, si l'image de fond est de couleur foncée, la couleur de l'indicateur sera modifiée pour rester visible.

L'invention concerne également un dispositif de visualisation sécurisée sur un écran d'un terminal électronique. Selon l'invention, le dispositif est apte à mettre en œuvre les étapes du procédé décrit précédemment, et comprend les moyens suivants :
- des moyens de détermination (par exemple sous la forme d'un module de détermination) du mode de fonctionnement, sécurisé ou ouvert, du terminal, contrôlés par au moins un processeur sécurisé du terminal ;
- des moyens d'affichage et de modification d'affichage (par exemple sous la forme d'un module d'affichage et de modification d'affichage) d'au moins un indicateur représentatif du mode de fonctionnement du terminal, les moyens d'affichage et de modification d'affichage étant contrôlés par au moins un processeur sécurisé du terminal et tenant compte d'au moins une action prédéterminée de l'utilisateur sur le terminal et/ou d'une expiration d'au moins un délai prédéterminé.

L'invention concerne également un terminal électronique comprenant un dispositif de visualisation tel que décrit précédemment.

### 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre les principales étapes du procédé de visualisation selon un mode de réalisation de l'invention ;
- les figures 2a à 2c illustrent des exemples de mise en œuvre de l'invention selon différents modes de réalisation, lorsque le terminal fonctionne en mode sécurisé ;
- les figures 3a à 3c illustrent des exemples de mise en œuvre de l'invention selon différents modes de réalisation, lorsque le terminal fonctionne en mode ouvert ;
- la figure 4 présente un exemple de dispositif de visualisation selon un mode de réalisation de l'invention.

### 6. Description d'un mode de réalisation de l'invention

### 6.1 Principe général

Le principe général de l'invention repose sur la mise à jour de l'affichage, sur un écran d'un terminal électronique, d'un indicateur représentatif du mode de fonctionnement sécurisé ou ouvert du terminal, la mise à jour dépendant principalement des actions utilisateurs.

Ainsi, certains paramètres d'affichage de l'indicateur, encore appelé avertisseur visuel, sont modifiés en fonction des actions de l'utilisateur sur le terminal, comme par exemple des saisies sur un clavier, physique ou virtuel, ou en fonction de l'expiration d'un délai prédéterminé, comme par exemple une certaine durée sans interactions de l'utilisateur.

De cette manière, l'invention, selon ses différents modes de réalisation, permet de moduler l'affichage de l'avertisseur visuel pour s'adapter au mieux à l'utilisation du terminal, tout en permettant d'alerter l'utilisateur en cas de risque de saisies de données sensibles en mode ouvert par exemple ou de rassurer l'utilisateur en mode sécurisé.

### 6.2 Description d'un mode de réalisation

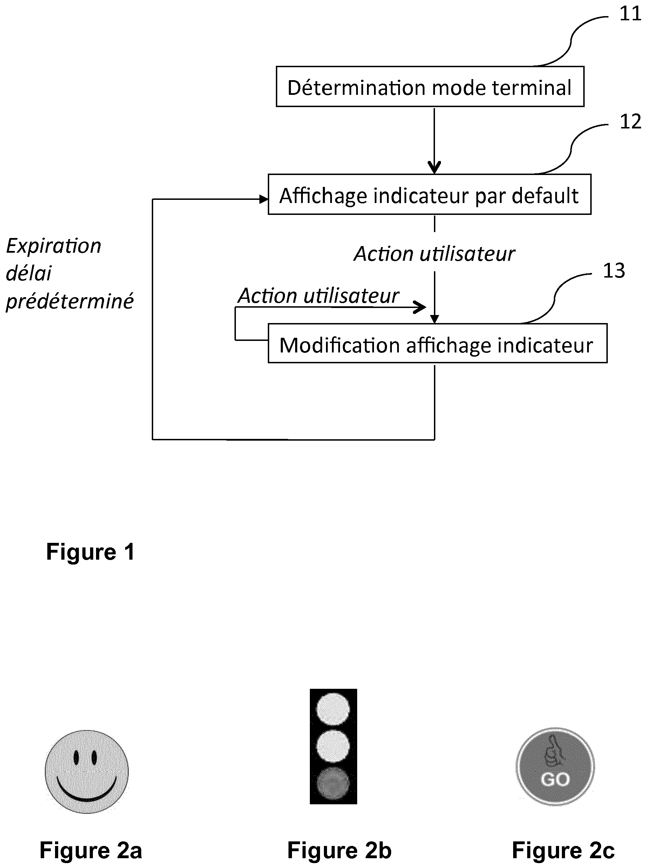

On présente maintenant, en relation avec la figure 1, les principales étapes du procédé de visualisation selon un mode de réalisation particulier de l'invention.

Une première étape 11 permet de déterminer le mode de fonctionnement, sécurisé ou ouvert, du terminal. Cette détermination est mise en œuvre par un processeur sécurisé du terminal. L'architecture du terminal peut être mono processeur, et dans ce cas l'unique processeur est sécurisé, ou multi-processeur, et dans ce cas il y a au moins un processeur qui est sécurisé, et c'est celui qui détermine le mode de fonctionnement de l'écran.

L'affichage d'un indicateur représentatif du mode de fonctionnement du terminal peut donc être mis en œuvre, selon une étape 12, une fois ce mode de fonctionnement déterminé. Cet affichage, ainsi que les modifications ultérieures de l'affichage, est également contrôlé par le processeur sécurisé, de façon à éviter qu'une application malveillante n'empêche ou n'altère cet affichage.

Ainsi, selon ce mode de réalisation particulier de l'invention, un avertisseur visuel est affiché, sous la forme d'un icône en transparence au-dessus de la ou des applications en cours d'affichage sur l'écran du terminal. Cet affichage peut être considéré comme un affichage par défaut de l'indicateur.

Par exemple, cet icône se présente sous la forme d'un « smiley » (figure 2a), d'un feu vert (figure 2b), ou encore d'un icône tel qu'illustré sur la figure 2c, lorsque le terminal fonctionne en mode sécurisé.

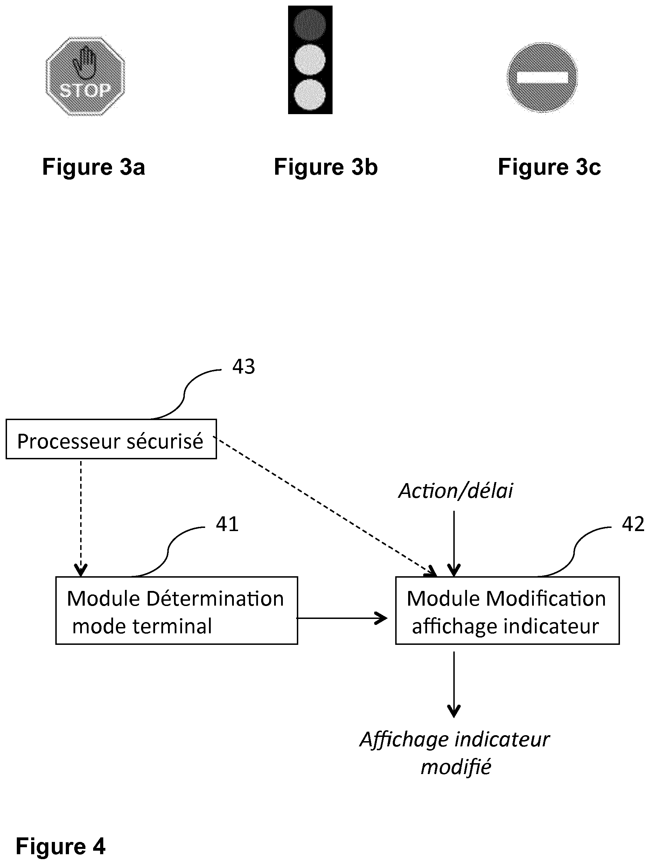

Lorsque le terminal fonctionne en mode ouvert, cet icône se présente par exemple sous la forme d'un « stop » (figure 3a), d'un feu rouge (figure 3b) ou encore d'un sens interdit (figure 3c).

Selon ce mode de réalisation de l'invention, l'affichage par défaut de l'icône en transparence peut être intermittent, de façon à éveiller l'intérêt de l'utilisateur.

Cet affichage par défaut peut également être mis en œuvre de façon « mobile », à des positions changeantes, par exemple aléatoirement à intervalle régulier.

De plus, l'affichage par défaut peut être différent selon le mode de fonctionnement du terminal. En effet, en mode sécurisé, l'objectif est de rassurer l'utilisateur, sans le perturber dans son utilisation du terminal. Dans ce cas, l'affichage pourra être fixe et permanent. Mais il pourra également être mobile en fonction de modifications d'affichage d'une application en cours, dans le but de ne pas gêner l'utilisateur, par exemple lors d'une saisie. Par contre, dans le mode ouvert, l'objectif étant d'alerter l'utilisateur, l'affichage par défaut pourra être intermittent et mobile. Ces exemples d'affichage par défaut sont purement illustratifs et non limitatifs, plusieurs combinaisons des différents paramètres d'affichage de l'icône peuvent être envisagées, selon les besoins des utilisateurs, les applications déjà affichées sur le terminal, etc.

Ensuite, une étape 13 de modification d'affichage de l'indicateur est mise en œuvre, suite à une action de l'utilisateur.

Par exemple, une action utilisateur telle qu'une saisie sur un clavier, physique ou virtuel, une saisie via un capteur biométrique ou une saisie vocale, déclenche une modification d'affichage de l'avertisseur visuel, selon ce mode de réalisation de l'invention.

Par exemple, selon une première variante de ce mode de réalisation, on considère que le terminal est en mode ouvert, un icône alertant l'utilisateur étant affiché en transparence sur une application *A.* Cette application *A* requiert par exemple une saisie de l'utilisateur, comme la validation d'un choix. Cette validation de l'utilisateur engendre une modification de l'affichage de l'indicateur, de façon à rappeler plus distinctement à l'utilisateur que le terminal fonctionne en mode ouvert. Une étape 13 de modification d'affichage de l'indicateur est donc mise en œuvre. Par exemple, la taille de l'icône augmente, de façon à être plus visible, ou bien son intensité augmente, ou encore sa transparence diminue ou l'avertisseur clignote. Ces différents paramètres d'affichage peuvent bien sûr être modifiés simultanément. D'autres paramètres comme par exemple la luminosité, la couleur ou encore la position de l'icône peuvent également être modifiés. Ces paramètres d'affichage ne sont pas exhaustifs et sont cités à titre illustratif.

Dans cette première variante, on considère que l'utilisateur, après avoir validé son choix, n'interagit plus avec le terminal pendant une durée supérieure à un délai prédéterminé, par exemple quelques secondes. Dans ce cas, selon cette première variante de ce mode de réalisation de l'invention, une étape 12 de retour à l'affichage par défaut de l'indicateur peut être mise en œuvre, à l'expiration du délai prédéterminé. En effet, le risque que l'utilisateur soit en cours de saisie de données sensibles telles qu'un code confidentiel n'est plus avéré, lorsque l'utilisateur n'interagit plus pendant plusieurs secondes après une première saisie.

Selon une deuxième variante, on considère toujours que le terminal est en mode ouvert et que, selon une étape 12, un icône alertant l'utilisateur est affiché en transparence sur une application *B.* Selon cette variante, on envisage le cas où cette application *B* est malveillante et requiert de l'utilisateur la saisie de données sensibles, comme par exemple des données bancaires et en particulier un code confidentiel. Si l'utilisateur commence à saisir ce code, la première saisie engendre une modification de l'affichage de l'indicateur, par la mise en œuvre d'une étape 13 de modification de l'affichage, de façon à rappeler plus distinctement à l'utilisateur que le terminal fonctionne en mode ouvert. Comme dans la première variante, un ou plusieurs paramètres tels que la taille, l'intensité, la transparence, la luminosité, la couleur ou encore la position de l'icône peuvent être modifiés. A la suite de la deuxième saisie de l'utilisateur, si celui-ci continue, malgré l'avertisseur visuel, à saisir des données sensibles, une étape 13 de modification de l'affichage de l'indicateur est à nouveau mise en œuvre, de façon à modifier à nouveau un ou plusieurs paramètres d'affichage de l'icône, l'objectif étant toujours d'alerter l'utilisateur sur le mode ouvert du terminal. Selon le comportement de l'utilisateur, plusieurs étapes successives de modification de l'affichage de l'icône pour le rendre plus visible sont donc mises en œuvre, suite à des actions, comme par exemple des saisies de l'utilisateur. A l'expiration d'un délai prédéterminé pendant lequel l'utilisateur n'a pas interagi avec le terminal, l'affichage revient à l'état par défaut.

Selon une troisième variante, on considère cette fois que le terminal est en mode sécurisé (étape 11), et l'icône affiché en transparence (étape 12) permet de rassurer l'utilisateur qui s'apprête par exemple à saisir des données sensibles comme un code confidentiel. A chaque saisie de l'utilisateur, une étape 13 de modification de l'affichage de l'indicateur peut être mise en œuvre, par exemple pour modifier la position de l'indicateur, de façon à ne pas perturber l'utilisateur tout en le rassurant sur le fait que le terminal fonctionne effectivement en mode sécurisé. Dans cette variante, il n'est pas nécessaire par exemple d'augmenter l'intensité ou la luminosité ou encore la taille de l'indicateur, le but étant de rassurer l'utilisateur sans gêner son utilisation du terminal. En revanche, un changement de position de l'indicateur peut renforcer son sentiment de sécurité sans le perturber dans sa saisie. Bien évidemment, d'autres paramètres d'affichage de l'indicateur peuvent être modifiés.

Selon ce mode de réalisation de l'invention, les étapes 12 d'affichage de l'indicateur et 13 de modification de l'affichage de l'indicateur peuvent de plus prendre en considération une information représentative d'une position prédéterminée pour l'indicateur, de façon par exemple à tenir compte du ou des affichages déjà en cours sur l'écran. Ainsi, le processeur sécurisé a à sa disposition une ou plusieurs informations concernant la ou les applications en cours d'affichage, et notamment par exemple des informations correspondant à des paramètres d'affichage tels que la position sur l'écran. De cette manière, l'icône, ainsi que ses paramètres d'affichage, sont choisis de manière à assurer une visibilité optimale de l'indicateur, en fonction du fond d'écran et de la ou des applications en cours d'affichage.

Par exemple, dans le cas d'un clavier tactile permettant des saisies par l'utilisateur, la position de l'indicateur peut être déterminée en fonction d'un historique de saisies déjà effectuées par l'utilisateur. Dans un autre cas, si une application occupe la partie inférieure de l'écran, le procédé selon l'invention permet de choisir un icône à afficher en transparence par exemple sur la partie supérieure de l'écran

De plus, les étapes 12 d'affichage de l'indicateur et 13 de modification de l'affichage de l'indicateur peuvent également prendre en considération des informations relatives au fond d'écran. Ainsi, par exemple, si le fond d'écran est de couleur foncée, le procédé selon l'invention permet de choisir un icône de couleur claire.

### 6.3 Exemple de dispositif de visualisation

La figure 4 présente la structure simplifiée d'un dispositif de visualisation mettant en œuvre le procédé de visualisation selon les différents modes de réalisation de l'invention (par exemple le mode de réalisation particulier décrit ci-dessus en relation avec la figure 1). Ce dispositif comprend des moyens 41 de détermination du mode de fonctionnement, sécurisé ou ouvert, du terminal (par exemple sous la forme d'un module de détermination du mode de fonctionnement) et des moyens 42 de d'affichage et de modification d'affichage d'au moins un indicateur représentatif du mode de fonctionnement du terminal (par exemple sous la forme d'un module d'affichage et de modification d'affichage). Les moyens 41 de détermination du mode de fonctionnement et 42 d'affichage et de modification d'affichage sont contrôlés par au moins un processeur sécurisé 43 du terminal et les moyens 42 d'affichage et de modification d'affichage tiennent compte d'au moins une action prédéterminée de l'utilisateur sur le terminal et/ou d'une expiration d'au moins un délai prédéterminé.

Cette figure 4 illustre seulement une manière particulière, parmi plusieurs possibles, de réaliser les différents modes de réalisation de l'invention décrits ci-dessus.

Par exemple, le module 41 de détermination du mode de fonctionnement et le module 42 d'affichage et de modification d'affichage peuvent faire partie du processeur sécurisé.

## Revendications

1. **Procédé** de visualisation sécurisée sur un écran d'un terminal électronique, **caractérisé en ce qu'**il comprend les étapes suivantes :
• une étape de détermination (11) du mode de fonctionnement, sécurisé ou ouvert, dudit terminal ;
• une étape d'affichage (12) d'au moins un indicateur par défaut représentatif dudit mode de fonctionnement déterminé dudit terminal ;
• une étape de modification d'affichage (13) dudit indicateur, ladite étape de modification d'affichage tenant compte d'au moins une action prédéterminée dudit utilisateur sur ledit terminal, ladite au moins une action prédéterminée appartenant au groupe comprenant :
une saisie sur un clavier physique ; une saisie sur un clavier tactile ; une saisie via un capteur biométrique ; une saisie vocale,
lesdites étapes de détermination (11) du mode de fonctionnement, d'affichage (12) et de modification d'affichage (13) étant contrôlées par au moins un processeur sécurisé dudit terminal,
et **en ce qu'**il comprend, lorsque ledit terminal est utilisé en mode ouvert pour effectuer au moins une première et une deuxième saisie sur ledit terminal :
• une première mise en œuvre de ladite étape de modification d'affichage dudit indicateur lorsque ledit utilisateur effectue ladite première saisie sur ledit terminal ; et
• une deuxième mise en œuvre de ladite étape de modification d'affichage dudit indicateur de façon à rendre l'indicateur encore plus visible lorsque ledit utilisateur effectue ladite deuxième saisie sur ledit terminal.

2. **Procédé** de visualisation selon la revendication 1, **caractérisé en ce que** ladite étape de modification d'affichage tient compte d'au moins une information représentative d'une position prédéterminée pour ledit indicateur.

3. **Procédé** de visualisation selon la revendication 1, **caractérisé en ce que** ladite étape de modification d'affichage consiste en une modification d'au moins un paramètre de visualisation dudit indicateur appartenant au groupe comprenant :
• l'intensité ;
• la luminosité ;
• la transparence ;
• la couleur;
• la taille ;
• la forme ;
• la position sur l'écran ;
• la langue du texte ;
• une combinaison d'au moins deux desdits paramètres dudit groupe.

4. **Procédé** de visualisation selon la revendication 1, **caractérisé en ce que** ladite étape de modification d'affichage met en œuvre un affichage en transparence d'un indicateur sous la forme d'au moins un objet graphique.

5. **Procédé** de visualisation selon la revendication 4, **caractérisé en ce que** ledit affichage en transparence dudit indicateur est mis en œuvre à intervalle régulier.

6. **Procédé** de visualisation selon la revendication 1, **caractérisé en ce que** ladite étape de modification d'affichage tient compte en outre d'au moins un paramètre d'affichage du fond d'écran dudit terminal.

7. **Dispositif** de visualisation sécurisée sur un écran d'un terminal électronique, **caractérisé en ce qu'**il comprend les moyens suivants :
• des moyens de détermination (41) du mode de fonctionnement, sécurisé ou ouvert, dudit terminal ;
• des moyens d'affichage (42) d'au moins un indicateur représentatif dudit mode de fonctionnement dudit terminal ;
des moyens de modification d'affichage (42) dudit indicateur, lesdits moyens d'affichage et de modification d'affichage tenant compte d'au moins une action prédéterminée dudit utilisateur sur ledit terminal, ladite au moins une action prédéterminée appartenant au groupe comprenant : une saisie sur un clavier physique ; une saisie sur un clavier tactile ; une saisie via un capteur biométrique ; une saisie vocale,
lesdits moyens de détermination du mode de fonctionnent et lesdits moyens d'affichage et de modification d'affichage étant contrôlés par au moins un processeur sécurisé (43) dudit terminal,
et **en ce que**, lorsque ledit terminal est utilisé en mode ouvert pour effectuer au moins une première et une deuxième saisie sur ledit terminal, lesdits moyens d'affichage sont configurés pour :
• une première mise en œuvre de ladite étape de modification d'affichage dudit indicateur lorsque ledit utilisateur effectue ladite première saisie sur ledit terminal ; et
• une deuxième mise en œuvre de ladite étape de modification d'affichage dudit indicateur de façon à rendre l'indicateur encore plus visible lorsque ledit utilisateur effectue ladite deuxième saisie sur ledit terminal.

8. **Terminal électronique, caractérisé en ce qu'**il comprend un dispositif de visualisation selon la revendication 7.

## Patentansprüche

1. Verfahren zum sicheren Anzeigen auf einem Bildschirm eines elektronischen Endgeräts, **dadurch gekennzeichnet, dass** es die folgenden Schritte aufweist:
• einen Schritt des Bestimmens (11) des sicheren oder offenen Betriebsmodus des Endgeräts,
• einen Schritt des Anzeigens (12) mindestens eines Standardindikators, der für den bestimmten Betriebsmodus des Endgeräts repräsentativ ist,
• einen Schritt des Modifizierens des Anzeigens (13) des Indikators, wobei der Schritt des Modifizierens des Anzeigens mindestens eine vorbestimmte Aktion des Benutzers auf dem Endgerät berücksichtigt, wobei die mindestens eine vorbestimmte Aktion zu der Gruppe gehört, umfassend:
eine Eingabe über eine physische Tastatur, eine Eingabe über eine Touch-Tastatur, eine Eingabe über einen biometrischen Sensor, eine Spracheingabe,
wobei die Schritte des Bestimmens (11) des Betriebsmodus, des Anzeigens (12) und des Modifizierens des Anzeigens (13) durch mindestens einen gesicherten Prozessor des Endgeräts gesteuert werden,
und **dadurch gekennzeichnet, dass** es, wenn das Endgerät im offenen Modus verwendet wird, um mindestens eine erste und eine zweite Eingabe auf dem Endgerät durchzuführen, aufweist:
• einen ersten Schritt des Umsetzens des Schrittes des Modifizierens des Anzeigens des Indikators, wenn der Benutzer die erste Eingabe auf dem Endgerät durchführt, und
• einen zweiten Schritt des Umsetzens des Schrittes des Modifizierens des Anzeigens des Indikators derart, um den Anzeiger noch sichtbarer zu machen, wenn der Benutzer die zweite Eingabe auf dem Endgerät durchführt.

2. Verfahren zum Anzeigen nach Anspruch 1, **dadurch gekennzeichnet, dass** der Schritt des Modifizierens des Anzeigens mindestens eine Information berücksichtigt, die für eine vorbestimmte Position für den Indikator repräsentativ ist.

3. Verfahren zum Anzeigen nach Anspruch 1, **dadurch gekennzeichnet, dass** der Schritt des Modifizierens des Anzeigens in einem Modifizieren von mindestens einem Anzeigeparameter des Indikators besteht, der zu der Gruppe gehört, umfassend:
• die Intensität,
• die Helligkeit,
• die Transparenz,
• die Farbe,
• die Größe,
• die Form,
• die Position auf dem Bildschirm,
• die Sprache des Textes,
• eine Kombination von mindestens zwei Parametern der Gruppe.

4. Verfahren zum Anzeigen nach Anspruch 1, **dadurch gekennzeichnet, dass** der Schritt des Modifizierens des Anzeigens ein transparentes Anzeigen eines Indikators in Form von mindestens einem graphischen Objekt aufweist.

5. Verfahren zum Anzeigen nach Anspruch 4, **dadurch gekennzeichnet, dass** das transparente Anzeigen des Indikators in regelmäßigen Abständen durchgeführt wird.

6. Verfahren zum Anzeigen nach Anspruch 1, **dadurch gekennzeichnet, dass** der Schritt des Modifizierens des Anzeigens ferner mindestens einen Anzeigeparameter des Bildschirmhintergrunds berücksichtigt.

7. Vorrichtung zum sicheren Anzeigen auf einem Bildschirm eines elektronischen Endgeräts, **dadurch gekennzeichnet, dass** es die folgenden Mittel aufweist:
• Mittel zum Bestimmen (41) des sicheren oder offenen Betriebsmodus des Endgeräts,
• Mittel zum Anzeigen (42) mindestens eines Standardindikators, der für den bestimmten Betriebsmodus des Endgeräts repräsentativ ist, Mittel zum Modifizieren des Anzeigens (42) des Indikators, wobei die Mittel zum Modifizieren des Anzeigens mindestens eine vorbestimmte Aktion des Benutzers auf dem Endgerät berücksichtigen, wobei die mindestens eine vorbestimmte Aktion zu der Gruppe gehört, umfassend: eine Eingabe über eine physische Tastatur, eine Eingabe über eine Touch-Tastatur,
eine Eingabe über einen biometrischen Sensor, eine Spracheingabe,
wobei die Mittel zum Bestimmen des Betriebsmodus und die Mittel zum Anzeigen und zum Modifizieren des Anzeigens durch mindestens einen gesicherten Prozessor (43) des Endgeräts gesteuert werden,
und **dadurch gekennzeichnet, dass**, wenn das Endgerät im offenen Modus verwendet wird, um mindestens eine erste und eine zweite Eingabe auf dem Endgerät durchzuführen, die Mittel zum Anzeigen konfiguriert sind für:
• einen ersten Schritt des Umsetzens des Schrittes des Modifizierens des Anzeigens des Indikators, wenn der Benutzer die erste Eingabe auf dem Endgerät durchführt, und
• einen zweiten Schritt des Umsetzens des Schrittes des Modifizierens des Anzeigens des Indikators derart, um den Anzeiger noch sichtbarer zu machen, wenn der Benutzer die zweite Eingabe auf dem Endgerät durchführt.

8. Elektronisches Endgerät, **dadurch gekennzeichnet, dass** es eine Vorrichtung zum Anzeigen nach Anspruch 7 aufweist.

## Claims

1. Method of secured viewing on a screen of an electronic terminal, **characterized in that** it comprises the following steps:
• a step (11) for determining the mode of operation, whether secured or open, of said terminal;
• a step (12) for displaying at least one default indicator representing said determined mode of operation of said terminal;
• a step (13) for modifying the display of said indicator, said step for modifying display taking account of at least one predetermined action of said user on said terminal, said at least one predetermined action belonging to the group comprising: an entry on a physical keypad; an entry on a touchpad; an entry via a biometric sensor; a voice entry,
said steps for determining the mode of operation (11), displaying (12) and modifying (13) display being controlled by at least one secured processor of said terminal,
and **in that** it comprises, when the terminal is used in open mode to make at least a first and a second entry on said terminal:
• a first implementation of said step of modifying the display of said indicator when the user makes said first entry on said terminal; and
• a second implementation of said step of modifying the display of said indicator so as to make the indicator even more visible when the user makes said second entry on said terminal.

2. **Method of viewing according to claim** 1, **characterized in that** said step for modifying display takes account of at least one piece of information representing a predetermined position for said indicator.

3. **Method of viewing according to claim** 1, **characterized in that** said step for modifying display consists of a modification of at least one parameter of viewing of said indicator belonging to the group comprising:
• intensity;
• luminosity;
• transparency;
• color;
• size;
• shape;
• the position on the screen;
• the language of the text;
• a combination of at least two of the parameters of said group.

4. **Method of viewing according to claim** 1, **characterized in that** said step for modifying display implements a transparent display of an indicator in the form of at least one graphic object.

5. **Method of viewing according to claim** 4, **characterized in that** said transparent display of said indicator is done at regular intervals.

6. **Method of viewing according to claim** 1, **characterized in that** said step for modifying display also takes account of at least one parameter of display of the background image of said terminal.

7. Device for secured viewing on a screen of an electronic terminal, **characterized in that** it comprises the following means:
• means (41) for determining the mode of operation, whether secured or open, of said terminal;
• means for displaying (42) at least one default indicator representing said determined mode of operation of said terminal;
• means for modifying the display (42) of said indicator, said means for displaying and modifying display taking account of at least one predetermined action by said user on said terminal, said at least one predetermined action belonging to the group comprising: an entry on a physical keypad; an entry on a touchpad; an entry via a biometric sensor; a voice entry,
said means for determining the mode of operation and said means for displaying and modifying display being controlled by at least one secured processor (43) of said terminal,
and **in that**, when the terminal is used in open mode to make at least a first and a second entry on said terminal, said means are configured for:
• a first implementation of said step of modifying the display of said indicator when the user makes said first entry on said terminal; and
• a second implementation of said step of modifying the display of said indicator so as to make the indicator even more visible when the user makes said second entry on said terminal.

8. Electronic terminal **characterized in that** it comprises a viewing device according to claim 7.
